# EUROPÄISCHE PATENTSCHRIFT

(11) **EP 3 548 849 B1**
(45) Veröffentlichungstag und Bekanntmachung des Hinweises auf die Patenterteilung: **07.09.2022**
(21) Anmeldenummer: 17781495.1
(22) Anmeldetag: 11.10.2017
(51) Int. Cl.: G01F 1/58

(54) **MAGNETISCH-INDUKTIVES DURCHFLUSSMESSGERÄT**
MAGNETICALLY INDUCTIVE FLOW METER
DÉBITMÈTRE MAGNÉTO-INDUCTIF

(30) Priorität: 30.11.2016 DE 102016123123
(43) Veröffentlichungstag der Anmeldung: 09.10.2019
(73) Patentinhaber: Endress+Hauser Flowtec AG, 4153 Reinach (CH)
(72) Erfinder: SULZER, Thomas, 4058 Basel (CH); TSCHAMBSER, Florent, 68220 Hesingue (FR)
(74) Vertreter: Penner, Paul
(86) Internationale Anmeldenummer: PCT/EP2017/075924
(87) Internationale Veröffentlichungsnummer: WO 2018/099640

(56) Entgegenhaltungen:
- EP-A1- 2 290 331
- EP-A1- 2 290 331
- EP-A2- 0 608 793
- EP-A2- 0 608 793
- DE-A1-102007 005 898
- DE-A1-102007 005 898
- JP-A- H09 145 434
- US-A1- 2010 192 700
- US-A1- 2010 192 700

## Beschreibung

Die vorliegende Erfindung betrifft ein magnetisch-induktives Durchflussmessgerät nach dem Oberbegriff des Anspruchs 1.

Magnetisch-induktive Durchflussmessgeräte dienen der Durchflussmessung eines Messmediums in einer Rohrleitung. Typischerweise wird in diesen Durchflussmessgeräten innerhalb des Messrohres eine elektrisch-isolierende Verkleidung, ein sogenannter Liner eingesetzt.

Typischerweise weist ein magnetisch-induktives Durchflussmessgerät Messelektroden und eine Elektrode zur Füllstandsüberwachung, eine sogenannte MSÜ-Elektrode auf.

Elektroden werden in vielen Fällen durch die Rohrwandung eines Messrohres des magnetisch-induktiven Durchflussmessgerätes durchgeführt, wodurch sich eine Aufgabe zur besonderen Abdichtung der Öffnung der Messrohrwand ergibt durch welche die jeweilige Elektrode, die Mess-Elektrode oder die MSÜ-Elektrode, geführt werden.

Eine zusätzliche Herausforderung ergibt sich bei dem Einsatz des Durchflussmessgerätes im Lebensmittel- und/oder Trinkwasserbereich. Hierbei sollte das Dichtmittel zur Abdichtung der Öffnung auch für die Verwendung im Trinkwasser- und/oder Lebensmittelbereich zugelassen sein.

Weiterhin ist bei der Auswahl des Dichtmittels zu berücksichtigen, dass das Dichtmittel keine Schädigung des an die Elektrode angrenzenden Materials des Messrohres beim Festlegen der Elektrode nicht zerstört wird.

Somit sind mehrere Kriterien bei der Ausgestaltung des Dichtmittels zu berücksichtigen. Oftmals müssen dabei Kompromisse bei der Verarbeitung und Formgebung eingegangen werden.

Die JPH09145434A offenbart ein magnetisch-induktives Durchflussmessgerät, welches ohne zusätzliches abdichtendes Element auskommt, da der Liner die Dichtung übernimmt. Zudem offenbart die JPH09145434A ein magnetisch-induktives Durchflussmessgerät umfassend ein Kunststoffmessrohr, dass zwar ohne Liner auskommt, jedoch stattdessen einen O-Ring zum Abdichten vorsieht.

Die gattungsgemäße DE 10 2007 005 898 A1, EP 2 290 331 A1, US 2010/0192700 A1 und die WO 2008/092794 A1 offenbaren jeweils ein magnetisch-induktives Durchflussmessgerät mit einem Messrohr, einer Messelektrode mit einem Elektrodenkopf und einer Elektrodenfixier-Anordnung, wobei das Messrohr eine elektrisch-isolierende Auskleidung aufweist. Zwischen der elektrisch-isolierenden Auskleidung und dem Elektrodenkopf ist ein Dichtmittel angeordnet, welches als PTFE-Dichtring ausgebildet ist.

Die EP 0 608 793 A2 offenbart ein magnetisch-induktives Durchflussmessgerät mit einer Elektrode, welche eine zylindrisches Isolierstück aufweist, das den Elektrodenschaft umschließt, sich an einem dafür vorgesehenen Flansch abstützt und von einer Überwurfmutter gehalten wird. Weiterhin weist das magnetisch-induktive Durchflussmessgerät eine Flachdichtung auf, die an der Anschlagsfläche der Elektrode angeordnet ist.

Die Anordnung der Messelektrode am Messrohr und das Dichtmittel des vorgenannten Standes der Technik haben sich grundlegend als bereits sehr zuverlässig erwiesen, allerdings ist es ausgehend vom vorgenannten Stand der Technik Aufgabe der vorliegenden Erfindung eine weitergehende Verbesserung der Dichtheit zu erreichen.

Diese Aufgabe wird gelöst durch ein magnetisch-induktives Durchflussmessgerät mit den Merkmalen des Anspruchs 1.

Ein erfindungsgemäßes magnetisch-induktives Durchflussmessgerät umfasst ein Messrohr mit einer Messrohrwand, welche eine elektrisch isolierende Fläche aus einem ersten Material aufweist. Das Messrohr kann aus einem elektrisch-isolierenden Material bestehen oder aus einem mit einer elektrisch-isolierenden Auskleidung versehenen metallischen Stützrohr.

Das Durchflussmessgerät weist zumindest eine erste Elektrode mit einer Elektrodenachse auf. Die Elektrode kann eine Messelektrode oder eine MSÜ-Elektrode. In einer besonders bevorzugten Ausführungsvariante sind alle Elektroden des Durchflussmessgerätes im Messrohr wie die nachfolgend näher erläuterte Elektrode ausgebildet.

Die Elektrode weist zumindest eine Elektrodenstirnfläche zum Abgriff eines Messsignals, insbesondere einer Messspannung, in einem Messmedium auf.

Die Elektrode weist zudem einen Elektrodenschaft auf, welcher sich durch die Messrohrwand erstreckt. Hierfür ist in der Messrohrwand vorzugsweise eine Öffnung vorgesehen. Der Elektrodensitz kann beispielsweise flach oder kegelförmig ausgebildet sein.

Die Elektrode weist einen vom Elektrodenschaft hervorstehenden Anschlag mit einer Anschlagsfläche auf, welcher die Verschiebbarkeit der Elektrode gegenüber der Messrohrwandung entlang der Elektrodenachse begrenzt.

Die Elektrode weist zumindest in einem Bereich des Elektrodenschaftes und zumindest in einem Bereich der Anschlagfläche eine elektrisch-isolierende Beschichtung auf.

Das Material der elektrisch-isolierenden weist dabei eine geringere Shorehärte auf als das erste Material welches die elektrisch-isolierende Fläche des Messrohres ausbildet.

Die Beschichtung ermöglicht einerseits eine optimale Abdichtung entlang des Elektrodenschaftes auch in die Öffnung des Messrohres hinein. Zudem wird beim Festlegen der Elektrode das elektrisch-isolierende Material des Messrohres nicht geschädigt.

Weitere vorteilhafte Ausgestaltungen der Erfindung sind Gegenstand der Unteransprüche.

Das Messrohr kann vorteilhaft eine Einprägung zur Aufnahme der Elektrode aufweisen.

Es ist von Vorteil, wenn die Beschichtung die Anschlagfläche vollständig bedeckt. Dadurch wird die Tendenz zu randseitigen Anschmutzungen und Ablagerungen vermindert.

Die Anschlagfläche ist vorteilhaft Teil eines im bestimmungsgemäßen Betrieb mediumsberührenden Elektrodenkopfes, wodurch eine optimale Abdichtung erreicht wird.

Das Messrohr ist vorteilhaft als ein metallisches Stützrohr und eine elektrisch-isolierende Auskleidung ausgebildet. Bei einem Kunststoffrohr kann bei höheren Drücken eine Querschnittsaufweitung erfolgen. Diese tritt bei einem metallischen Stützrohr typischerweise nicht auf.

Der Elektrodenkopf kann die Elektrodenstirnfläche aufweist, wobei der Elektrodenkopf im Bereich der Elektrodenstirnfläche zur Optimierung der Messwerterfassung abgerundet ist.

Die elektrisch-isolierende Beschichtung kann vorteilhaft als eine epoxidharzbasierte Beschichtung, eine silikon-basierte Beschichtung oder eine polyamidbasierte Beschichtung ausgebildet sein. Besonders bevorzugt ist dabei eine trinkwasserzugelassene epoxidharzbasierte Beschichtung oder eine trinkwasserzugelassene polyamidbasierte Beschichtung. Ganz besonders bevorzugt ist eine PA11- und/oder PA12-basierte Beschichtung.

Das erste Material des Messrohres kann vorteilhaft aks ein epoxidharzbasiertes Material, ein Keramikmaterial oder bevorzugt ein polyamidbasiertes Material, insbesondere ein PA11 und/oder PA12-basiertes Material ausgebildet sein.

Die Shorehärte der Beschichtung der Elektrode ist vorteilhaft kleiner als Shore D = 75.

Die Elektrode kann vorteilhaft durch eine federnde Fixierung am Messrohr festgelegt sein. Dadurch wird eine Materialschädigung bei der Festlegung der Elektrode zusätzlich verhindert und ein Ausgleich bei Materialausdehnungen bei größeren Temperaturdifferenzen zwischen den Herstelltemperaturen von 10-30°C und den Einsatztemperaturen erreicht werden.

Die Schichtdicke der Beschichtung kann vorteilhaft mehr als 300 µm betragen, insbesondere eine vorteilhafte mittlere Schichtdicke der Beschichtung zwischen 320 bis 1000 µm.

Die Anschlagsfläche kann sich in fertigungstechnisch einfacher Weise senkrecht zur Elektrodenachse erstrecken.

Die Anschlagsfläche kann sich alternativ zur senkrechten Anordnung auch radial zur Elektrodenachse erstrecken, wobei die Elektrode im Bereich der Anschlagfläche kegelförmig ausgebildet ist.

Die Beschichtung kann stoffschlüssig mit dem ersten Material des Messrohres verbunden sein. Dies kann z.B. über Verklebung oder Verschmelzen erfolgen. Dadurch wird eine zusätzlich erhöhte Dichtheit erreicht.

Die Beschichtung kann in fertigungstechnisch einfacher Weise einschichtig auf der Elektrode angeordnet sein.

Besonders vorteilhaft kann es sich bei der Verbindung der Beschichtung mit der Elektrode um eine Hybridverbindung handeln, welche dadurch charakterisiert ist, dass zwischen dem Metall und der Beschichtung eine chemische Verbindung ausgebildet ist. Ein Ablösen der Beschichtung wird dadurch verhindert und die Beschichtung ist stabiler gegenüber Abrieb. Eine Hybridverbindung kann beispielsweise durch Aktivierung der Metalloberfläche der Elektrode vor dem Auftrag der Beschichtung erreicht werden.

Nachfolgend wird die Erfindung anhand eines mehrerer Ausführungsvarianten näher beschrieben. Es zeigen:
- Fig. 1: schematische Darstellung einer ersten erfindungsgemäßen Variante einer Anordnung einer Elektrode an einem Messrohr eines magnetisch-induktiven Durchflussmessgeräts;
- Fig. 2: schematische Darstellung einer zweiten erfindungsgemäßen Variante einer Anordnung einer Elektrode an einem Messrohr eines magnetisch-induktiven Durchflussmessgeräts;
- Fig. 3: schematische Darstellung einer dritten erfindungsgemäßen Variante einer Anordnung einer Elektrode an einem Messrohr eines magnetisch-induktiven Durchflussmessgeräts; und
- Fig. 4: schematische Darstellung eines Ausführungsbeispiels eines erfindungsgemäßen magnetisch-induktiven Durchflussmessgeräts.

Magnetisch induktive Durchflussmessgeräte finden vielfach Anwendung in der Prozess- und Automatisierungstechnik für Fluide ab einer elektrischen Leitfähigkeit von etwa 5 µS/cm. Entsprechende Durchflussmessgeräte werden beispielsweise von der Anmelderin in unterschiedlichsten Ausführungsformen für verschiedene Anwendungsbereiche unter der Bezeichnung PROMAG vertrieben.

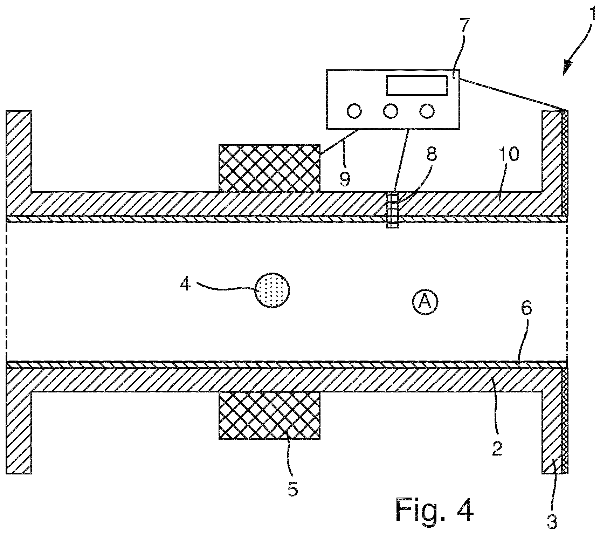

Das Messprinzip eines magnetisch-induktiven Durchflussmessgerätes 1, wie es in Fig. 4 abgebildet ist, ist grundsätzlich bekannt. Gemäß dem Faraday'schen Induktionsgesetz wird in einem Leiter, der sich in einem Magnetfeld bewegt, eine Spannung induziert. Beim magnetisch-induktiven Messprinzip entspricht der fließende Messstoff bzw. das Messmedium dem bewegten Leiter. Ein Magnetsystem 5 zur Ausbildung eines Magnetfeldes kann beispielsweise durch zwei Feldspulen, welche diametral an einem Messrohr 2 angeordnet sind, gebildet werden. Senkrecht dazu befinden sich an der Rohrinnenwand des Messrohres 2 zwei Messelektroden 4 welche die beim Durchfließen des Messstoffe erzeugte Spannung abgreifen. Die induzierte Spannung verhält sich proportional zur Durchflussgeschwindigkeit und damit zum Volumendurchfluss. Das durch das Magnetsystem 5 aufgebaute Magnetfeld kann durch einen getakteten Gleichstrom wechselnder Polarität erzeugt werden. Dies gewährleistet einen stabilen Nullpunkt und macht die Messung unempfindlicher gegenüber Einflüssen durch Mehrphasenstoffe, Inhomogenität in der Flüssigkeit oder geringer Leitfähigkeit. Es sind magnetisch-induktive Durchflussmessgeräte mit Spulenanordnungen mit mehr als zwei Magnetspulen und anderer geometrischer Anordnung bekannt.

Fig. 4 zeigt ein magnetisch-induktives Durchflussmessgerät 1 mit dem Messrohr 2 umfassend ein Stützrohr 10, insbesondere ein metallisches Stützrohr, und einer im Stützrohr 10 angeordneten elektrisch-isolierenden Kunststoffauskleidung 6, dem sogenannten Liner.

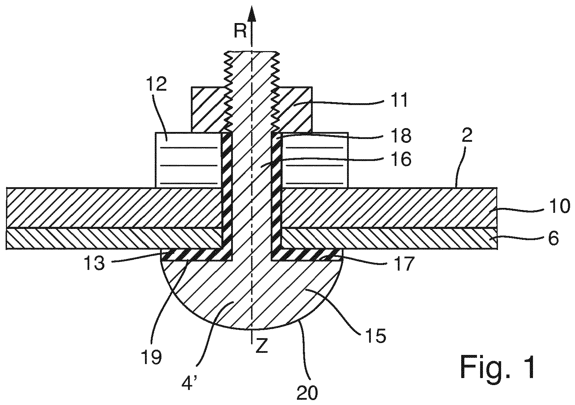

Das Messrohr 2 weist zwei Flansche 3 auf, welche eine Verbindung mit einem Prozessanschluss ermöglichen. Die Außenwandung des Messrohres 2 weist oberhalb und unterhalb der Messrohrachse das Magnetsystem 5 auf, welches in Fig. 1 in Form von zwei Magnetspulen dargestellt ist.

Dieses Magnetsystem erzeugt im Betrieb des magnetisch induktiven Durchflussmessgerätes ein Magnetfeld. Bei horizontalem Einbau auf gleicher Höhe wie die Messrohrachse sind die zwei Messelektroden 4 angeordnet, welche sich diametral gegenüberstehen und im Betrieb eine im Messmedium erzeugte Spannung abgreifen. Sofern der Volumendurchfluss gemessen werden soll, ist es besonders von Bedeutung, dass die Befüllung des Messrohres 2 möglichst vollständig ist. Daher kann an der Messrohrachse bei horizontalem Einbau am höchsten Punkt des Innendurchmessers des Messrohres 2 eine Elektrode 8 eines Füllstandsüberwachungssystems angeordnet sein, welche im vorliegenden Fall als Messstoffüberwachungselektrode, kurz MSÜ-Elektrode, ausgebildet ist. Diese erstreckt sich durch die Wandung des Messrohres 2, also durch den Liner 6 und durch die metallische Wandung des Stützrohres 10 und ist an der mediumsabgewandten Seite der Außenwandung des Messrohres 2 befestigt.

Innerhalb der MSÜ-Elektrode kann ein Temperatursensor in Form eines Widerstandsthermometers angeordnet sein.

Die Mess- und Auswerteeinrichtung 7 ermöglicht die Steuerung des Betriebs des magnetisch-induktiven Durchflussmessgeräts 1 und insbesondere der Energieversorgung des Magnetsystems 5 durch ein Energieversorgungssystem und ist mit dem Magnetsystem über eine Energieversorgungs- und/oder Signalleitung 9 verbunden ist.

Fig. 1-3 zeigen jeweils erfindungsgemäße Ausführungsvarianten welche zur Verankerung der Messelektroden 4 oder auch wahlweise für die Verankerung der MSÜ-Elektrode 8 gewählt werden können. Jeder der Varianten der Fig. 1-3 sind somit mit dem magnetisch-induktives Durchflussmessgerät der Fig. 4 realisierbar.

Fig. 1 zeigt eine Elektrode 4' welche einen Elektrodenkopf 15 und einen Elektrodenschaft 16 aufweist. Der Elektrodenkopf 15 ist als Pilzkopf-Form ausgebildet. Eine solche Pilzkopf-Form weist eine zumindest randseitig abgerundete Stirnfläche 20, insbesondere eine gleichmäßig gebogene Stirnfläche, auf. Die Stirnfläche 20 ragt in den Innenraum A des Messrohres 2 hinein.

Die Elektrode 4' weist zudem eine Anschlagfläche 19 auf, welche die Verschieblichkeit R der Elektrode 4' entlang der Elektrodenachse Z innerhalb des Loches der Messrohrwandung begrenzt.

Die Anschlagsfläche 19 ist eben ausgebildet mit einer Flächenebene welche senkrecht zur Elektrodenachse Z verläuft.

Zwischen der Anschlagsfläche 19 und der dem Messrohr 2 zugeordneten elektrisch-isolierenden Materials des Liners 6 ist eine Beschichtung 13 angeordnet, welche sich zumindest bereichsweise über die Anschlagsfläche 19 und über die Oberfläche des Elektrodenschaftes 16 erstreckt.

Somit kann die Beschichtung 13 in einen ersten Teilbereich 17 entlang der Anschlagfläche 19 und in einen zweiten Teilbereich 18 entlang des Elektrodenschaftes 16 unterteilt werden. Die Teilbereiche 17 und 18 gehen ineinander über, so dass sich eine über beide Teilbereiche 17 und 18 durchgehende Beschichtung 13 ergibt.

Die Elektrode 4' ist von außen am Messrohr 2 durch eine Fixierung festgelegt. Diese Fixierung umfasst im konkreten Fall der Fig. 1 ein Fixiermittel 11, z.B. für eine Schraubfixierung, und ein Fixierlagerung 12, beispielsweise eine Lagerscheibe. Die Fixierlagerung 12 ist in Fig. 1 als eine Feder, insbesondere als eine Tellerfeder ausgebildet, so dass sich eine federnde Fixierung der Elektrode 4' ergibt.

Durch die federnde Fixierung kann ein Ausgleich bei höheren oder niedrigeren Temperaturen, z.B. für eine thermische Materialausdehnung erreicht werden.

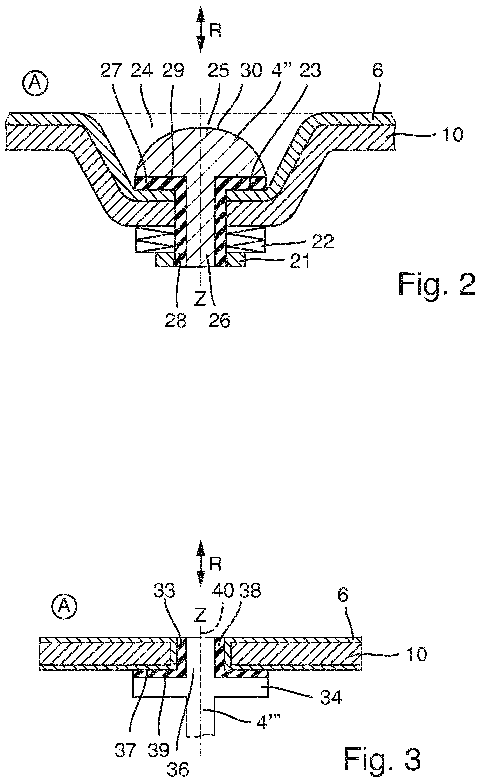

In Fig. 2 ist eine artgleich zur Fig. 1 ausgebildete Elektrode 4" dargestellt. Diese Elektrode 4" weist ein Fixiermittel 21 und eine Fixierlagerung 12 in Form einer Tellerfeder auf. Dadurch wird eine federnde Fixierung erreicht. Die Elektrode weise eine im bestimmungsgemäßen Betrieb mediumsberührende Stirnfläche 30 und eine Anschlagfläche 29 auf, welche die Beweglichkeit R der Elektrode 4" gegenüber der Messrohrwand begrenzt.

Die Messrohrwand 2 weist analog zu Fig. 1 ein metallisches Stützrohr 10 und eine elektrisch-isolierende Auskleidung 6 auf. Im Unterschied zur Fig. 1 weist das Messrohr ein

Umformbereich in Form einer Einprägung 24 auf zur Aufnahme der Elektrode 4". Diese ist somit in dem radial aus der Messrohrwand ausgeformten Umformbereich angeordnet. Dies hat den Vorteil, dass die Elektrode 4" nicht unmittelbar in der Strömung des Messmediums angeordnet ist und keinen Strömungswiderstand darstellt.

Die Elektrode 4" weist einen Elektrodenkopf 25 und einen Elektrodenschaft 26 auf, sowie eine Beschichtung 23 welche sich entlang der am Elektrodenkopf 25 angeordneten Anschlagfläche 29 und entlang des Elektrodenschaftes 26 erstreckt. Die Beschichtung 23 ist dabei in einen Bereich 27 entlang der Anschlagsfläche 29 und in einen Bereich 28 entlang des Elektrodenschaftes 26 angeordnet, wobei die Bereiche 27 und 28 ineinander übergehen. Der Elektrodenkopf 25 ist im Rahmen der vorliegenden Erfindung als Vorsprung gegenüber dem Elektrodenschaft 26 zu verstehen.

Die Anschlagfläche 29 weist eine Flächenebene auf weiche sich senkrecht zur Elektrodenachse Z erstreckt. Es ist allerdings auch möglich, dass die Elektrode 4‴ im Bereich der Anschlagfläche kegelförmig, z.B. kegelstumpfförmig, ausgebildet ist. Dabei ist das Loch in der Messrohrwand nicht als senkrechtes Loch ausgebildet sondern weist zur Kegelform der Anschlagfläche der Elektrode 4‴ korrespondierende Schrägwände auf.

Fig. 3 zeigt eine weitere erfindungsgemäße Variante auf mit einer Elektrode 4‴ und deren Verankerung im Messrohr, wobei die Elektrode 4‴ als sogenannte Stiftelektrode ausgebildet ist. Eine solche Elektrode 4‴ ist anders als die in Fig. 1 und 2 dargestellte Pilzkopfelektrode von außen in das Messrohr eingesteckt, so dass die im bestimmungsgemäßen Betrieb mediumsberühende Stirnfläche 40 der Elektrode 4'" mit der Messrohrwand 2 fluchtet.

Die Festlegung der Elektrode 4‴ am Messrohr 2 ist nicht näher dargestellt, jedoch grundsätzlich bekannt. Eine Stiftelektrode 4‴ wird typischerweise bei Durchflussmessgeräten mit Messrohren mit geringen Nennweiten, z.B. kleiner als DN50, eingesetzt.

Anders als in Fig. 1 und Fig. 2 ist das Messrohr der Fig. 3 aus einem metallischen Stützrohr 10 gebildet wobei sich die darin befindliche elektrisch-isolierende Auskleidung 6 auch über den äußeren nicht-mediumsberührenden Bereich des Stützrohres 10 erstreckt. Die Auskleidung kann als Pulverbeschichtung oder als Tauchbeschichtung, z.B. im Rahmen eines sogenannten Dip-Coatings, in einem Schritt aufgebracht werden. Idealerweise ist das Material der Auskleidung trinkwasserzugelassen.

Alternativ kann allerdings auch ein Keramikrohr oder ein Kunststoffrohr anstelle des Messrohres aus Kombination aus Stützrohr 10 und Auskleidung 6 genutzt werden.

Die Stiftelektrode weist einen Vorsprung 34, insbesondere einen plattenförmigen Vorsprung, auf, welcher jedoch anders als der Elektrodenkopf nicht endständig am Elektrodenschaft 36 angeordnet ist sondern in einem mittleren Bereich des Elektrodenschaftes 36.

Eine Anschlagfläche 39 des Vorsprungs 34 ist von außen am Messrohr angeordnet und begrenzt die Verschiebbarkeit R der Elektrode 4‴ entlang der Elektrodenachse z gegenüber des Messrohres 2 und der darin befindlichen Öffnung in welcher die Elektrode 4‴ eingesetzt ist. Die Elektrode 4‴ weist sowohl in dem in der Öffnung des Messrohres befindlichen Bereich des Elektrodenschaftes 36 eine elektrisch-isolierende Beschichtung 33 auf als auch im Bereich der Anschlagsfläche 39. Die Eigenschaften der Beschichtung 33 sind analog zu den Beschichtungen 13 und 23 der Fig. 1 und 2 ausgebildet. Die Beschichtung 33 lässt sich somit in einen Bereich 37 entlang der Anschlagsfläche 39 und in einen Bereich 38 entlang des Elektrodenschaftes 36 unterteilt werden.

Die Elektroden 4', 4", 4‴ bestehen aus einem elektrisch-leitenden Material, vorzugsweise aus einem korrosionsresistentem Metall, besonders bevorzugt aus Stahl, insbesondere aus einem Stahl der Sorte 1.4435 und/oder 1.4455. Sie sind bevorzugt rotationssymmetrisch ausgebildet.

Die in Fig. 1-3 dargestellten Elektroden 4', 4", 4‴ können sowohl als Messelektroden oder als MSÜ-Elektroden eingesetzt werden.

Die elektrisch-isolierende Beschichtung der Elektroden der Fig. 1-3 kann als eine epoxidharzbasierte Beschichtung, als eine silikon-basierte Beschichtung oder bevorzugt eine polyamidbasierte Beschichtung, insbesondere eine PA11 und/oder PA12-basierte Beschichtung, ausgebildet sein.

Eine epoxidharz-, silikon- oder polyamidbasierte Beschichtung bedeutet, dass zumindest 50 Gew.%, vorzugsweise zumindest 80 Gew.% des jeweiligen Polymers in der Beschichtung enthalten sind. Das Polymer ist somit die Hauptkomponente der Beschichtung 13, 23 oder 33.

Besonders bevorzugt als Polyamid ist ein Polyamid PA11/12, welches unter dem Handelsnamen Rilsan bekannt ist.

Das Messrohr kann sowohl als Keramikrohr, als Kunststoffrohr oder als Metallrohr mit einer elektrisch-isolierenden Auskleidung ausgebildet sein. Insbesondere die Auskleidung kann dabei ebenfalls aus einem Epoxidharz oder auf einem Polyamid, vorzugsweise auf einem PA11 und/oder PA12, insbesondere auf Rilsan, basieren.

Die Shorehärte der Beschichtung sollte kleiner oder gleich der Shorehärte des gesamten Messrohres im Fall eines Kunststoffrohres oder eines Keramikrohes betragen oder der Auskleidung im Fall eines metallischen Stützrohres betragen.

Konkret empfiehlt sich eine Shorehärte von Shore D kleiner oder gleich als 75 für die Beschichtung 13, 23, 33.

Die mittlere Schichtdicke der Beschichtung 13, 23, 33 kann vorteilhaft größer als 300 µm betragen um eine elektrische Isolierung zu erreichen. Besonders bevorzugt empfiehlt sich eine vorteilhafte mittlere Schichtdicke der Beschichtung zwischen 320 bis 1000 µm.

Bevorzugt und vorteilhaft weist die Schichtdicke der Beschichtung 13, 23, 33 eine einheitliche Schichtdickenverteilung sowohl im Bereich der Anschlagfläche als auch im Bereich des Elektrodenschaftes auf. Eine einheitliche Schichtdicke variiert um weniger als 15%, vorzugsweise um weniger als 10% zwischen der maximalen oder minimalen und der mittleren Schichtdicke.

Die Beschichtung 13, 23, 33 kann stoffschlüssig mit dem ersten Material des Messrohres verbunden sein. Ein Stoffschluss kann durch eine Klebe oder Schmelzverbindung erreicht werden. Letzteres kann beispielsweise durch eine Laserbehandlung erreicht werden.

Eine Reihe funktionaler Beschichtungen sind mehrschichtig ausgebildet. Die vorliegende Beschichtung 13, 23, 33 kann kostensparend und herstellungstechnisch effizient als einschichtige Beschichtung auf der Elektrode angeordnet sein.

### Bezugszeichenliste

- 1: Durchflussmessgerät
- 2: Messrohr
- 3: Flansch
- 4: Messelektroden
- 5: Magnetsystem
- 6: Kunststoffauskleidung
- 7: Mess- und Auswerteeinrichtung
- 8: Elektrode zur Füllstandsüberwachung
- 9: Energieversorungs- und/oder Signalleitung
- 10: Stützrohr
- 4', 4", 4'": Elektrode
- 11: Fixiermittel
- 12: Fixierlagerung
- 13: Beschichtung
- 15: Elektrodenkopf
- 16: Elektrodenschaft
- 17: Teilbereich
- 18: Teilbereich
- 19: Anschlagsfläche
- 20: Stirnfläche
- 21: Fixiermittel
- 22: Fixierlagerung
- 23: Beschichtung
- 24: Einprägung
- 25: Elektrodenkopf
- 26: Elektrodenschaft
- 27: Teilbereich
- 28: Teilbereich
- 29: Anschlagsfläche
- 30: Stirnfläche
- 33: Beschichtung
- 34: Vorsprung
- 35: Elektrodenkopf
- 36: Elektrodenschaft
- 37: Teilbereich
- 38: Teilbereich
- 39: Anschlagfläche
- 40: Stirnfläche

- Z: Elektrodenachse
- R: Verschiebbarkeit

## Patentansprüche

1. Magnetisch-induktives Durchflussmessgerät (1) mit einem Messrohr (2) mit einer Messrohrwand (6), welche eine elektrisch isolierende Fläche aus einem ersten Material aufweist, und zumindest einer ersten Elektrode (4', 4", 4‴) mit einer Elektrodenachse (Z), wobei die Elektrode (4', 4", 4‴) zumindest eine Elektrodenstirnfläche (20, 30, 40) zum Abgriff eines Messsignals, insbesondere einer Messspannung, in einem Messmedium aufweist und einen Elektrodenschaft (16, 26, 36), welcher sich durch die Messrohrwand erstreckt, wobei die Elektrode (4', 4", 4‴) einen vom Elektrodenschaft (16, 26, 36) hervorstehenden Anschlag mit einer Anschlagsfläche (19, 29, 39) aufweist zur Begrenzung der Verschiebbarkeit (R) der Elektrode (4', 4", 4"') gegenüber der Messrohrwandung entlang der Elektrodenachse (Z), **dadurch gekennzeichnet, dass** die Elektrode (4', 4", 4‴) in einem Bereich des Elektrodenschaftes (16, 26, 36) und in einem Bereich der Anschlagfläche (19, 29, 39) eine elektrisch-isolierende Beschichtung (13, 23, 33) aufweist, wobei das Material der elektrisch-isolierenden Beschichtung (13, 23, 33) eine geringere Shorehärte aufweist als das erste Material welches die elektrisch-isolierende Fläche des Messrohres (2) ausbildet; und
dass die Begrenzung der Verschiebbarkeit (R) der Elektrode (4', 4", 4"') gegenüber der Messrohrwand (6) mit einem Kontakt zwischen der elektrisch-isolierenden Beschichtung (13, 23, 33) und dem ersten Material vorliegt.

2. Magnetisch-induktives Durchflussmessgerät nach einem der vorhergehenden Ansprüche, **dadurch gekennzeichnet, dass** das Messrohr (2) eine Einprägung (24) zur Aufnahme der Elektrode (4") aufweist.

3. Magnetisch-induktives Durchflussmessgerät nach einem der vorhergehenden Ansprüche, **dadurch gekennzeichnet, dass** die Beschichtung (13, 23, 33) die Anschlagfläche (19, 29, 39) vollständig bedeckt.

4. Magnetisch-induktives Durchflussmessgerät nach einem der vorhergehenden Ansprüche, **dadurch gekennzeichnet, dass** die Anschlagfläche (19, 29) Teil eines mediumsberührenden Elektrodenkopfes (15, 25) ist.

5. Magnetisch-induktives Durchflussmessgerät nach einem der vorhergehenden Ansprüche, **dadurch gekennzeichnet, dass** das Messrohr (2) ein metallisches Stützrohr (10) und eine elektrisch-isolierende Auskleidung (6) aufweist.

6. Magnetisch-induktives Durchflussmessgerät nach einem der vorhergehenden Ansprüche, **dadurch gekennzeichnet, dass** der Elektrodenkopf (15, 25) die Elektrodenstirnfläche (20, 30) aufweist, wobei der Elektrodenkopf (15, 25) im Bereich der Elektrodenstirnfläche (20, 30) abgerundet ist.

7. Magnetisch-induktives Durchflussmessgerät nach einem der vorhergehenden Ansprüche, **dadurch gekennzeichnet, dass** die elektrisch-isolierende Beschichtung (13, 23, 33) eine epoxidharzbasierte Beschichtung, eine silikon-basierte Beschichtung oder bevorzugt eine polyamidbasierte Beschichtung, insbesondere eine PA11 und/oder PA12-basierte Beschichtung, ist.

8. Magnetisch-induktives Durchflussmessgerät nach einem der vorhergehenden Ansprüche, **dadurch gekennzeichnet, dass** das erste Material des Messrohres (2) ein epoxidharzbasiertes Material, ein Keramikmaterial oder bevorzugt ein polyamidbasiertes Material, insbesondere ein PA11 und/oder PA12-basiertes Material ist.

9. Magnetisch-induktives Durchflussmessgerät nach einem der vorhergehenden Ansprüche, **dadurch gekennzeichnet, dass** die Shorehärte der Beschichtung (13, 23, 33) kleiner ist als Shore D = 75.

10. Magnetisch-induktives Durchflussmessgerät nach einem der vorhergehenden Ansprüche, **dadurch gekennzeichnet, dass** die Elektrode (4', 4", 4‴) durch eine federnde Fixierung am Messrohr (2) festgelegt ist.

11. Magnetisch-induktives Durchflussmessgerät nach einem der vorhergehenden Ansprüche, **dadurch gekennzeichnet, dass** die Schichtdicke der Beschichtung (13, 23, 33) von größer als 300 µm beträgt.

12. Magnetisch-induktives Durchflussmessgerät nach einem der vorhergehenden Ansprüche, **dadurch gekennzeichnet, dass** die Anschlagsfläche (19, 29, 39) sich senkrecht zur Elektrodenachse (Z), erstreckt.

13. Magnetisch-induktives Durchflussmessgerät nach einem der vorhergehenden Ansprüche 1-11, **dadurch gekennzeichnet, dass** die Anschlagsfläche sich radial zur Elektrodenachse (Z), erstreckt und dass die Elektrode im Bereich der Anschlagfläche kegelförmig ausgebildet ist.

14. Magnetisch-induktives Durchflussmessgerät nach einem der vorhergehenden Ansprüche, **dadurch gekennzeichnet, dass** die Beschichtung (13, 23, 33) stoffschlüssig mit dem ersten Material des Messrohres (2) verbunden ist.

15. Magnetisch-induktives Durchflussmessgerät nach einem der vorhergehenden Ansprüche, **dadurch gekennzeichnet, dass** die Beschichtung (13, 23, 33) einschichtig auf der Elektrode (4', 4", 4‴) angeordnet ist.

## Claims

1. Electromagnetic flowmeter (1) with a measuring tube (2) with a measuring tube wall (6), wherein said wall has an electrically isolating surface from a first material, and at least a first electrode (4', 4", 4‴) with an electrode axis (Z), wherein the electrode (4', 4", 4‴) has at least an electrode front face (20, 30, 40) to capture a measuring signal, particularly a measured voltage, in a measured medium and an electrode shaft (16, 26, 36), which extends through the measuring tube wall, wherein the electrode (4' 4", 4‴) has a limit stop protruding out of the electrode shaft (16, 26, 36) with a limit stop surface (19, 29, 39) to limit the movability (R) of the electrode (4' 4" 4‴) in relation to the measuring tube wall along the electrode axis (Z), **characterized in that** the electrode (4', 4", 4‴) has an electrically isolating coating (13, 23, 33) in an area of the electrode shaft (16, 26, 36) and in an area of the limit stop surface (19, 29, 39), wherein the material of the electrically isolating coating (13, 23, 33) has a Shore hardness that is lower than the first material that forms the electrically isolating surface of the measuring tube (2); and
**in that** the limitation of the movability (R) of the electrode (4', 4" 4‴) in relation to the measuring tube wall (6) is present with a contact between the electrically isolating coating (13, 23, 33) and the first material.

2. Electromagnetic flowmeter as claimed in one of the previous claims, **characterized in that** the measuring tube (2) has an indentation (24) designed to receive the electrode (4").

3. Electromagnetic flowmeter as claimed in one of the previous claims, **characterized in that** the coating (13, 23, 33) fully covers the limit stop surface (19, 29, 39).

4. Electromagnetic flowmeter as claimed in one of the previous claims, **characterized in that** the limit stop surface (19, 29) is part of an electrode head (15, 25) in contact with the medium.

5. Electromagnetic flowmeter as claimed in one of the previous claims, **characterized in that** the measuring tube (2) comprises a metal support tube (10) and an electrically isolating liner (6).

6. Electromagnetic flowmeter as claimed in one of the previous claims, **characterized in that** the electrode head (15, 25) has the electrode front face (20, 30), wherein the electrode head (15, 25) is rounded in the area of the electrode front face (20, 30).

7. Electromagnetic flowmeter as claimed in one of the previous claims, **characterized in that** the electrically isolating coating (13, 23, 33) is an epoxy resin-based coating, a silicone-based coating or preferably a polyamide-based coating, particularly a PA11- and/or PA12-based coating.

8. Electromagnetic flowmeter as claimed in one of the previous claims, **characterized in that** the first material of the measuring tube (2) is an epoxy resin-based material, a ceramic material or preferably a polyamide-based material, particularly a PA11- and/or PA12-based material.

9. Electromagnetic flowmeter as claimed in one of the previous claims, **characterized in that** the Shore hardness of the coating (13, 23, 33) is less than Shore D = 75.

10. Electromagnetic flowmeter as claimed in one of the previous claims, **characterized in that** the electrode (4', 4", 4‴) is fixed on the measuring tube (2) by a spring fastener.

11. Electromagnetic flowmeter as claimed in one of the previous claims, **characterized in that** layer thickness of the coating (13, 23, 33) is greater than 300 µm.

12. Electromagnetic flowmeter as claimed in one of the previous claims, **characterized in that** the limit stop surface (19, 29, 39) is perpendicular to the electrode axis (Z).

13. Electromagnetic flowmeter as claimed in one of the previous claims, **characterized in that** the limit stop surface extends radially to the electrode axis (Z) and **in that** the electrode is conical in the area of the limit stop surface.

14. Electromagnetic flowmeter as claimed in one of the previous claims, **characterized in that** the coating (13, 23, 33) is connected by a substance-to-substance connection to the first material of the measuring tube (2).

15. Electromagnetic flowmeter as claimed in one of the previous claims, **characterized in that** the coating (13, 23, 33) is arranged on the electrode (4', 4", 4‴) in one layer.

## Revendications

1. Débitmètre électromagnétique (1) comprenant un tube de mesure (2) avec une paroi de tube de mesure (6), laquelle paroi présente une surface électriquement isolante en un premier matériau, et au moins une première électrode (4', 4", 4‴) avec un axe d'électrode (Z), l'électrode (4', 4", 4‴) présentant au moins une surface frontale d'électrode (20, 30, 40) pour prélever un signal de mesure, notamment une tension de mesure, dans un produit de mesure et une tige d'électrode (16, 26, 36), laquelle tige s'étend à travers la paroi du tube de mesure, l'électrode (4' 4", 4‴) présentant une butée faisant saillie de la tige d'électrode (16, 26, 36) avec une surface de butée (19, 29, 39) pour limiter la possibilité de déplacement (R) de l'électrode (4' 4" 4‴) par rapport à la paroi du tube de mesure le long de l'axe d'électrode (Z), **caractérisé en ce que** l'électrode (4', 4", 4‴) présente un revêtement électriquement isolant (13, 23, 33) dans une zone de la tige d'électrode (16, 26, 36) et dans une zone de la surface de butée (19, 29, 39), le matériau du revêtement électriquement isolant (13, 23, 33) présentant une dureté Shore plus faible que le premier matériau qui forme la surface électriquement isolante du tube de mesure (2) ; et
**en ce que** la limitation de la capacité de déplacement (R) de l'électrode (4', 4" 4‴) par rapport à la paroi du tube de mesure (6) est présente avec un contact entre le revêtement électriquement isolant (13, 23, 33) et le premier matériau.

2. Débitmètre électromagnétique selon l'une des revendications précédentes, **caractérisé en ce que** le tube de mesure (2) présente une empreinte (24) destinée à recevoir l'électrode (4").

3. Débitmètre électromagnétique selon l'une des revendications précédentes, **caractérisé en ce que** le revêtement (13, 23, 33) recouvre entièrement la surface de butée (19, 29, 39).

4. Débitmètre électromagnétique selon l'une des revendications précédentes, **caractérisé en ce que** la surface de butée (19, 29) fait partie d'une tête d'électrode (15, 25) en contact avec le produit.

5. Débitmètre électromagnétique selon l'une des revendications précédentes, **caractérisé en ce que** le tube de mesure (2) comprend un tube de support métallique (10) et un revêtement électriquement isolant (6).

6. Débitmètre électromagnétique selon l'une des revendications précédentes, **caractérisé en ce que** la tête d'électrode (15, 25) présente la face frontale d'électrode (20, 30), la tête d'électrode (15, 25) étant arrondie au niveau de la face frontale d'électrode (20, 30).

7. Débitmètre électromagnétique selon l'une des revendications précédentes, **caractérisé en ce que** le revêtement électriquement isolant (13, 23, 33) est un revêtement à base de résine époxy, un revêtement à base de silicone ou de préférence un revêtement à base de polyamide, notamment un revêtement à base de PA11 et/ou de PA12.

8. Débitmètre électromagnétique selon l'une des revendications précédentes, **caractérisé en ce que** le premier matériau du tube de mesure (2) est un matériau à base de résine époxy, un matériau céramique ou de préférence un matériau à base de polyamide, notamment un matériau à base de PA11 et/ou de PA12.

9. Débitmètre électromagnétique selon l'une des revendications précédentes, **caractérisé en ce que** la dureté Shore du revêtement (13, 23, 33) est inférieure à Shore D = 75.

10. Débitmètre électromagnétique selon l'une des revendications précédentes, **caractérisé en ce que** l'électrode (4', 4", 4‴) est fixée au tube de mesure (2) par une fixation élastique.

11. Débitmètre électromagnétique selon l'une des revendications précédentes, **caractérisé en ce que** l'épaisseur de couche du revêtement (13, 23, 33) est supérieure à 300 µm.

12. Débitmètre électromagnétique selon l'une des revendications précédentes, **caractérisé en ce que** la surface de butée (19, 29, 39) s'étend perpendiculairement à l'axe d'électrode (Z).

13. Débitmètre électromagnétique selon l'une des revendications précédentes, **caractérisé en ce que** la surface de butée s'étend radialement par rapport à l'axe d'électrode (Z) et **en ce que** l'électrode est de forme conique dans la zone de la surface de butée.

14. Débitmètre électromagnétique selon l'une des revendications précédentes, **caractérisé en ce que** le revêtement (13, 23, 33) est lié par liaison de matière au premier matériau du tube de mesure (2).

15. Débitmètre électromagnétique selon l'une des revendications précédentes, **caractérisé en ce que** le revêtement (13, 23, 33) est disposé en une seule couche sur l'électrode (4', 4", 4‴).
